# EUROPEAN PATENT SPECIFICATION

(11) **EP 2 418 967 B1**
(45) Date of publication and mention of the grant of the patent: **13.02.2013**
(21) Application number: 10717784.2
(22) Date of filing: 14.04.2010
(51) Int. Cl.: A23L 1/00, A23L 1/317, A22C 11/00, A22C 13/00, A22C 15/00

(54) **METHOD FOR PREPARING FOOD PRODUCTS AND SAUSAGE FOOD PRODUCT OBTAINED BY SAID METHOD**
VERFAHREN ZUR HERSTELLUNG VON NAHRUNGSMITTELPRODUKTEN UND NACH DIESEM VERFAHREN HERGESTELLTES NAHRUNGSMITTELPRODUKT, BEI DEM ES SICH UM EINE WURST HANDELT
PROCÉDÉ POUR PRÉPARER DES PRODUITS ALIMENTAIRES ET PRODUIT ALIMENTAIRE DE TYPE SAUCISSE OBTENU PAR LEDIT PROCÉDÉ

(30) Priority: 14.04.2009 ES 200930062
(43) Date of publication of application: 22.02.2012
(73) Proprietor: Institut de Recerca i Tecnologia Agroalimentàries, 08007 Barcelona (ES)
(72) Inventor: ARNAU ARBOIX, Jacint, E-08007 Barcelona (ES); COMAPOSADA BERINGUES, Josep, E-08007 Barcelona (ES); GRÈBOL MASSOT, Narcís, E-08007 Barcelona (ES)
(74) Representative: Ponti Sales, Adelaida
(86) International application number: PCT/IB2010/051604
(87) International publication number: WO 2010/119404

(56) References cited:
- WO-A1-99/44431
- WO-A1-99/55165
- DE-U1-202004 007 735
- US-A- 5 490 541

## Description

The present invention refers to a method for preparing food products and to a food product obtained by said method.

### BACKGROUND OF THE INVENTION

For preparing meat sausages it is required to use food casings to keep the shape of the food mass of the product at the end of the stuffing process.

Said casings must offer a mechanical strength enough to permit a holding element to be fixed, for hanging the product, particularly when said meat sausages are devised to be cured and matured by a drying process.

Traditionally, the casings with hanging strength have been natural guts of animal origin from cow, pig and sheep intestines.

However, the high production of sausages made the natural guts expensive, the market being more and more dependant on third countries. Furthermore, the use of a natural gut involves food security problems that could affect the sausage. Hence e.g. in the last years the spongiform encephalopathy (ESB) has raised doubts about the use of animal subproducts. In part, for this reason the world market of animal origin products for preparing food for animal and/or human consumption has been suffered an important regulation.

In the market there are also artificial guts made from collagen or cellulose, which permit to alleviate some of the problems that the natural guts raise. However, they are products that have a high cost and, therefore, they are used normally only for sausage products with a great diameter to reduce the cost for each piece.

Another kind of casings are known, which permit to keep the shape of the food mass of the product and which are cheaper than said guts. They are casings of vegetal or animal origin, that are formed on the surface of the food mass from substances or compounds in a gel state, or susceptible to acquire a gel state, such as e.g. calcium alginate gel or gelatin strictly speaking.

However, said casings have the drawback that they do not offer the suitable mechanical strength to permit a holding element for hanging the sausage to be fixed in the casing itself, so that they are used mainly in fresh sausages for cooking.

### DESCRIPTION OF THE INVENTION

The object of the present invention is to solve said drawbacks, providing a method for preparing food products and a sausage food product obtained by said method presenting the advantages that will be described hereinafter.

According to this object, according to a first aspect, the present invention refers to a method for preparing a dried raw meat food product, comprising the steps of:
a) providing a determined shape to the food mass of said product;
b) coating said mass with a casing to keep the shape of said mass, said casing consisting in a film formed on the surface of said mass from a substance or compound in a gel state, or susceptible of acquiring the gel state; and the step of:
c) placing a holding element for hanging said product at the surface of the product, before said step b), or during said step b).

In the method of the present invention, the holding element for hanging the product is placed integrated or embedded in the gel film that determines the casing provided to keep the shape of the food mass.

Surprisingly, it has been observed that if the holding element is integrated or embedded in a casing of said kind, this element can withstand the weight of the product in its hanging position.

Thanks to this feature it is possible to engage a hanging element to the product.

The claimed method has also the advantage that it permits to engage a holding element to products that could have a very different shape, because the kind of casing used does not condition the shape of the product, as it happens in case of natural guts. Therefore, it is possible to obtain a food product to be dried of a shape chosen specifically to optimize said drying process.

According to a second aspect, the present invention refers to a sausage food product comprising a casing for keeping the shape of the food mass of said product, said casing consisting in a film formed on the surface of said mass from a substance or compound in gel state, or susceptible to acquire the gel state, that is characterized in that it comprises a holding element placed embedded in said film for hanging said product.

The present invention provides a sausage product, preferably a raw meat product, with a cheap casing and very secure from a sanitary point of view, presenting the particularity that it can be hanged, e.g. for drying it.

Furthermore, the claimed sausage product presents the advantage that it does not include any kind of clip or equivalent element used in the prior art products to fix the holding element to said casing.

In the present invention as meat sausage product is meant a product comprising a food casing filled with a meat food mass.

### DETAILED DESCRIPTION OF THE INVENTION

According to the first aspect, the present invention refers to a method for preparing a dried raw meat food product in which:

Preferably, in step a) the shaping of the food mass is done by stuffing, in this case step c) is done advantageously during the stuffing, before step b).

Optionally, after step c) a shaping of the product is done, which is different from that done in step a).

According to a preferred embodiment, said substance or compound in gel state, or susceptible of acquiring the gel state, includes alginate.

The use of alginate casings offers a lot of advantages, such as e.g. the fact that it permits to add in the casing composition bacteriostatic or aromatic products, among others, which modify the organoleptic properties of the final product. Furthermore, e.g. it permits to add products that make the drying of the product easier.

Preferably, step b) includes the steps of:
bi) covering the food mass with a material including alginate, preferably sodium alginate; and
bii) dipping the food mass covered with sodium alginate in a solution including a calcium salt to form a gel film of calcium alginate.

Preferably, said gel film has a thickness from 0.3 mm and 2.0 mm.

Advantageously, the calcium alginate gel has been chosen to obtain a tensile strength of said gel of 15 KPa or greater.

Said method comprises, after step c), the step of hanging said product to be dried.

According to the second aspect, the present invention refers to a sausage food product obtained by the described method, wherein:

Preferably, said holding element is a filiform element for hanging said product, said filiform element being placed embedded in at least one end of said product.

However, said holding element can be, instead of a filiform element, a mesh-shaped element for hanging said product, said mesh-shaped element being placed embedded in at least one end of said product.

Advantageously, said mesh-shaped holding element can include a filiform element for hanging said product.

Preferably, said holding element is made from an edible material, of natural or synthetic origin.

According to a preferred embodiment, said substance or compound in gel state, or susceptible to acquire the gel state, includes alginate.

As stated previously, the use of alginate casings offers a lot of advantages, such as e.g. to permit the addition in the casing composition of products to enhance the drying of the food mass.

In the present invention a dried raw meat product is a product that has been subjected to a drying process. A drying process is meant any process in which it is carried out globally a water extraction from the product and that produces a preset loss of weight of the product.

### BRIEF DESCRIPTION OF THE DRAWINGS

For a better understanding of what has been disclosed some drawings are attached in which, diagrammatically and only as a non-limitative example, two practical embodiments are shown.

In said drawings,
Fig. 1 is a perspective view of a first preferred embodiment of the sausage food product of the present invention;
Fig. 2 shows a cross-section of the product of Fig. 1;
Fig. 3 is a perspective view of a second embodiment of the sausage product of the present invention;
Fig. 4 shows a cross-section of the product of Fig. 3.

### DESCRIPTION OF PREFERRED EMBODIMENTS

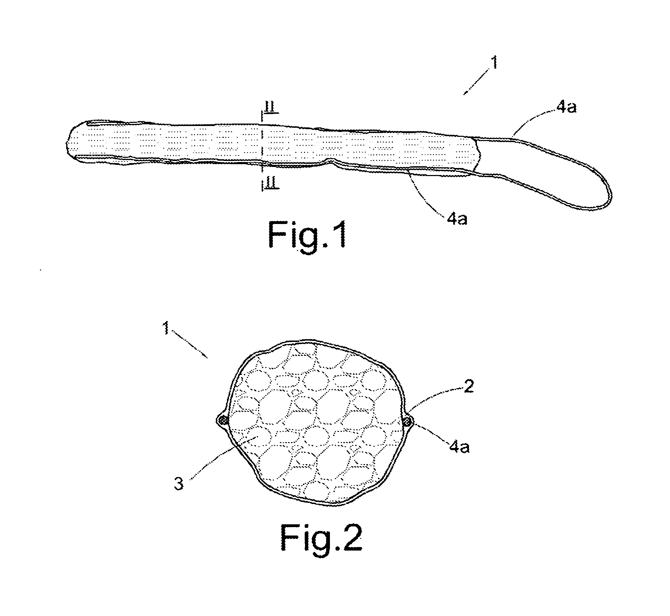

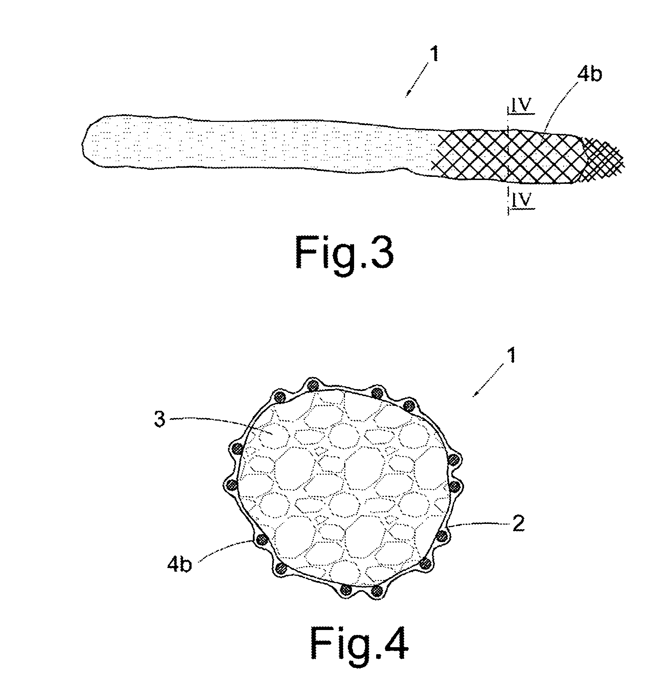

Figs. 1 and 4 show two embodiments corresponding to meat sausage products 1 comprising a food casing 2 to keep the shape of the food mass 3 of said product, and a holding element 4 placed integrated in the casing 2 for hanging said product 1.

As stated in the description of the invention, the casing 2 that covers the product 1 consists in a film formed on the surface of the food mass 3 from a substance or compound in a gel state, or susceptible of acquiring the gel state.

In the described embodiments, said film has been formed from sodium alginate which has been coagulated, until acquiring the gel state, contacting it with a calcium salt saturated solution, particularly, calcium chloride.

Figs. 1 and 2 show the preferred embodiment in which the holding element is a cotton yarn 4a extending longitudinally along the surface at both sides of the product 1, including a yarn turn for hanging it. However, the holding element can be, instead of a yarn 4a, a mesh 4b, or an equivalent element, placed integrated at an end of the product 1 (see Figs. 3 and 4).

As the section of Figs. 2 and 4 shows, the mesh 4b and the yarn 4a are integrated or embedded in the casing 2, permitting to support the weight of the product 1 in its hanging position.

Hereinafter, the method for preparing both embodiments of meat sausage products shown in the figures is described.

In the embodiment of Figs. 1 and 2, the meat mass 3 has been stuffed by a cylindrical funnel, the cotton yarn 4a being placed at both sides of the cylinder surface, at the exit of said funnel.

Then, the cylinder is covered with sodium alginate, and then, it is dipped in a calcium chloride saturated solution for forming the film of calcium chloride gel. Preferably, the calcium alginate gel has been selected to obtain a tensile strength of said gel of about 100 KPa.

The meat piece 1 formed has been drained during some minutes, hanging it afterwards to be taken to the drying place, where it has reached the desired weight loss to obtain the cured and matured product for the consumption.

In the embodiment of Figs. 3 and 4, the process has been similar, with the only difference that, instead of the yarn 4a, a mesh 4b has been placed along 10 cm of one of the ends of the sausage piece 1. In this case, to facilitate the hanging of the product 1 with the mesh 4b itself, said mesh 4b is placed so that it protrudes from the end. However, it could also be possible to tie a yarn turn to said mesh 4b to facilitate the hanging.

Even though two specific embodiments of the present invention have been described and shown, it is apparent that the person skilled in the art could introduce variations and modifications, or substitute the details by other technically equivalents, without departing from the scope of protection defined by the attached claims.

E.g. even though reference is made in the present specification to two products 1 stuffed by a cylindrical funnel, said products 1 could be stuffed by a funnel with a different shape. E.g. they could be stuffed with a funnel providing a shape which optimizes or accelerates the subsequent drying process to which the products 1 are submitted.

## Claims

1. Method for preparing a dried raw meat food product (1) comprising the steps of:
a) providing a determined shape to the food mass (3) of said product;
b) coating said mass (3) with a casing (2) for keeping the shape of said mass (3), said casing (2) consisting in a film formed on the surface of said mass (3) from a substance or compound in gel state, or susceptible of acquiring the gel state;
c) before step b), or during step b), placing on the surface of the product (1) a holding element (4) for hanging said product (1)- and
d) after step c), the step of hanging said product by said holding element (4) for drying it.

2. Method according to claim 1, wherein in step a) the shaping of the food mass (3) is done by stuffing.

3. Method according to claim 2, wherein step c) is done before step b) and during stuffing.

4. Method according to anyone of claims 1 to 3, wherein, after step c) a shaping of the product (1) is carried out, said shaping being different from the shaping of step a).

5. Method according to anyone of claims 1 to 4, wherein said substance or compound includes alginate.

6. Method according to claim 5, wherein step b) includes the steps of:
bi) covering the food mass (3) with a material including alginate, preferably sodium alginate; and
bii) dipping the food mass (3) covered by alginate in a solution including a calcium salt to form a film of calcium alginate.

7. Sausage food product (1) comprising a casing (2) for keeping the shape of the food mass (3) of said product, said casing consisting in a film (2) formed on the surface of said mass (3) from a substance or compound in gel state, or susceptible of acquiring the gel state, **characterized in that** it said product is a dried raw meat product and **in that** it comprises a holding element (4) for hanging said product (1) placed embedded in said film (2).

8. Product according to claim 7, wherein said holding element is a filiform element (4) for hanging said product (1), said filiform element being placed embedded in at least one end of said product (1).

9. Product according to claim 7, wherein said holding element is a mesh-shaped element (4b) for hanging said product (1), said mesh-shaped element being placed embedded in at least one end of said product (1).

10. Product according to claim 9, wherein said mesh-shaped holding element (4b) includes a filiform element for hanging said product.

11. Product according to anyone of claims 7 to 10, wherein said holding element is made from edible material.

12. Product according to anyone of claims 7 to 11, wherein said I substance or compound includes alginate.

## Patentansprüche

1. Verfahren zur Zubereitung eines getrockneten Rohfleisch-Nahrungsmittelproduktes (1), aufweisend die folgenden Schritte:
a) Versehen der Nahrungsmittelmasse (3) des Produktes mit einer vorbestimmten Form,
b) Beschichten der Masse (3) mit einer Hülle (2), um die Form der Masse (3) aufrechtzuerhalten, wobei die Hülle (2) aus einem Film besteht, der an der Oberfläche der Masse (3) aus einer Substanz oder einem Gemisch, die bzw. das einen gelartigen Zustand hat oder einen gelartigen Zustand annehmen kann, gebildet wird,
c) vor Schritt b), oder während Schritt b), Anordnen an der Oberfläche des Produktes (1) eines Halteelements (4) zum Aufhängen des Produkts (1), und
d) nach Schritt c) den Schritt des Aufhängens des Produkts mit dem Halteelement (4), um es zu trocknen.

2. Verfahren nach Anspruch 1, bei dem in Schritt a) das Formen der Nahrungsmittelmasse (3) durch Füllen erfolgt.

3. Verfahren nach Anspruch 2, bei dem Schritt c) vor Schritt b) und während des Füllens erfolgt.

4. Verfahren nach einem der Ansprüche 1 bis 3, bei dem nach Schritt c) ein Formen des Produktes (1) erfolgt, wobei dieses Formen von dem Formen bei Schritt a) verschieden ist.

5. Verfahren nach einem der Ansprüche 1 bis 4, bei dem die Substanz oder das Gemisch Alginat enthält.

6. Verfahren nach Anspruch 5, bei dem der Schritt b) die folgenden Schritte umfasst:
bi) Bedecken der Nahrungsmittelmasse (3) mit einem Material, welches Alginat,
vorzugsweise Natriumalginat, enthält, und
bii) Eintauchen der mit Alginat bedeckten Nahrungsmittelmasse (3) in eine Lösung, die ein Calciumsalz enthält, um einen Film aus Calciumalginat zu bilden.

7. Wurstnahrungsmittelprodukt (1) aufweisend eine Hülle (2), um die Form der Nahrungsmittelmasse (3) des Produkts aufrechtzuerhalten, wobei die Hülle aus einem Film (2) besteht, der an der Oberfläche der Masse (3) aus einer Substanz oder einem Gemisch, die bzw. das einen gelartigen Zustand hat oder einen gelartigen Zustand annehmen kann, gebildet wird, **dadurch gekennzeichnet, dass** das Produkt ein getrocknetes Rohfleischprodukt ist und ein Halteelement (4) zum Aufhängen des Produktes (1), das in den Film (2) eingebettet ist, aufweist.

8. Produkt nach Anspruch 7, bei dem das Halteelement ein fadenförmiges Element (4) zum Aufhängen des Produktes (1) ist, wobei das fadenförmige Element in wenigstens einem Ende des Produktes (1) eingebettet ist.

9. Produkt nach Anspruch 7, bei dem das Halteelement ein netzförmiges Element (4b) zum Aufhängen des Produktes (1) ist, wobei das netzförmige Element in wenigstens einem Ende des Produktes (1) eingebettet ist.

10. Produkt nach Anspruch 9, bei dem das netzförmige Halteelement (4b) ein fadenförmiges Element zum Aufhängen des Produktes umfasst.

11. Produkt nach einem der Ansprüche 7 bis 10, bei dem das Halteelement aus einem verzehrbaren Material hergestellt ist.

12. Produkt nach einem der Ansprüche 7 bis 11, bei dem die Substanz oder das Gemisch Alginat enthält.

## Revendications

1. Procédé pour préparer un produit alimentaire de viande crue séchée (1) comprenant les étapes consistant à :
a) donner une forme déterminée à la masse d'aliment (3) du produit ;
b) revêtir la masse (3) d'un boyau (2) pour maintenir la forme de la masse (3), le boyau (2) étant constitué d'un film formé sur la surface de la masse (3) à partir d'une substance ou d'une composition à l'état de gel, ou susceptible d'acquérir l'état de gel ;
c) avant l'étape b), ou pendant l'étape b), placer sur la surface du produit (1) un élément de support (4) pour suspendre le produit (1), et
d) après l'étape c), l'étape consistant à suspendre le produit par l'élément de support (4) pour le sécher.

2. Procédé selon la revendication 1, dans lequel à l'étape a) la mise en forme de la masse d'aliment (3) est faite par bourrage.

3. Procédé selon la revendication 2, dans lequel l'étape c) est réalisée avant l'étape b) et pendant le bourrage.

4. Procédé selon l'une quelconque des revendications 1 à 3, dans lequel, après l'étape c) une mise en forme du produit (1) est effectuée, la mise en forme étant différente de la mise en forme de l'étape a).

5. Procédé selon l'une quelconque des revendications 1 à 4, dans lequel la substance ou la composition comprend de l'alginate.

6. Procédé selon la revente indication 5, dans lequel l'étape b) comporte les étapes consistant à :
bi) recouvrir la masse d'aliment (3) avec un matériau incluant de l'alginate, de préférence de l'alginate de sodium ; et
bii) plonger la masse d'aliment (3) revêtue d'alginate dans une solution comprenant un sel de calcium pour former un film d'alginate de calcium.

7. Produit alimentaire de saucisse (1) comprenant un boyau (2) pour maintenir la forme de la masse d'aliment (3) du produit, le boyau étant constitué d'un film (2) formé à la surface de la masse (3) à partir d'une substance ou d'une composition à l'état de gel, ou susceptible d'acquérir l'état de gel, **caractérisé en ce que** le produit est un produit de viande crue séchée et **en ce qu'**il comprend un élément de support (4) pour suspendre le produit (1) enrobé dans le film (2).

8. Produit selon la revendication 7, dans lequel l'élément de support est un élément filiforme (4) destiné à suspendre le produit (1), l'élément filiforme étant enrobé dans au moins une extrémité du produit (1).

9. Produit selon la revendication 7, dans lequel l'élément de support est un élément en forme de filet (4b) pour suspendre le produit (1), l'élément en forme de filet étant enrobé dans au moins une extrémité du produit (1).

10. Produit selon la revendication 9, dans lequel l'élément de support en forme de filet (4b) comprend un élément filiforme pour suspendre le produit.

11. Produit selon l'une quelconque des revendications 7 à 10, dans lequel l'élément de support est constitué d'un matériau comestible.

12. Produit selon l'une quelconque des revendications 7 à 11, dans lequel la substance ou composition comprend de l'alginate.
